Europäisches Patentamt

European Patent Office

Office européen des brevets

(19)

(11) **EP 0 982 173 A2**

(12) **EUROPEAN PATENT APPLICATION**

(43) Date of publication:
**01.03.2000 Bulletin 2000/09**

(51) Int Cl.⁷: **B60K 31/00**, G05D 1/02, G01S 13/50

(21) Application number: **99306396.5**

(22) Date of filing: **13.08.1999**

| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **McConnell, Arden Marcus**<br>  **Dearborn, Michigan 48124 (US)**<br>• **Gee, Thomas Arthur**<br>  **Allen Park, Michigan 48101 (US)** |
|---|---|
| (30) Priority: **27.08.1998 US 141229** | (74) Representative: **Burke, Steven David et al**<br>**R.G.C. Jenkins & Co.**<br>**26 Caxton Street**<br>**London SW1H 0RJ (GB)** |
| (71) Applicant: **EATON CORPORATION**<br>**Cleveland, Ohio 44114-2584 (US)** | |

(54) **Method for determination of an optimum vehicle cruise separation distance**

(57)     A system and method for determination of a minimum separation distance when a vehicle is operating in a cruise control mode where the velocity and deceleration capability and reaction time of a host vehicle is used in conjunction with the velocity and an assumed deceleration capability of a lead vehicle to calculate a minimum separation distance. The deceleration capability of the host vehicle is estimated based on the condition of the service brakes, the braking capabilities of the transmission/engine and the braking capability of a retarder.

Fig. 1

**Description**

**RELATED APPLICATIONS**

The present application relates to applications U.S. Serial Number 08/396,640 entitled "System and Method for Intelligent Cruise Control Using Standard Engine Control Modes" and U.S. Serial Number 08/396,628 entitled "System and Method for Integrating Intelligent Cruise Control With An Electrically Controlled Engine" both assigned to the same assignee, Eaton Corporation, as this application.

**BACKGROUND OF THE INVENTION**

Field of the Invention

The present invention relates to a method of calculating a minimum vehicle separation distance when a host vehicle is operating in a cruise control mode based on a calculated dynamic vehicle deceleration capability of a host vehicle and an assumed deceleration capability of a lead vehicle.

Description of the Prior Art

The availability of inexpensive microprocessors and sophisticated electronic components has facilitated implementation of advanced safety and convenience features in a variety of automotive and trucking applications. As control systems become more complex and sophisticated, they are capable of providing the vehicle operator with systems such as cruise control having various degrees of criticality.

Recently, collision warning systems for vehicles have become commercially available. These systems utilize an electromagnetic beam, such as a microwave, laser, or ultrasonic beam. to detect the distance and/or closing rate between the host vehicle and a forward vehicle or other object to warn the driver of a possible impending collision. Obviously, it is important for these systems to consistently provide accurate information to the vehicle operator. Accurate information includes warning the vehicle operator when a collision is possible or probable, but also includes not warning the operator when a collision is unlikely or unprobable and to provide other vehicle systems with accurate vehicle information for other control functions such as smart cruise control. That is, the collision warning system can be used to provide vehicle separation distance information to a "smart cruise" system to determine the minimum acceptable separation distance between vehicles. In addition, information from other vehicle systems can be used to provide a basis for vehicle control functions.

Some prior art systems automatically decelerate the vehicle to maintain a predetermined following distance behind a forward vehicle. An example of such a system is described in U.S. Patent Application No. 08/396,640 entitled "System and Method for Intelligent Cruise Control Using Standard Engine Control Modes", filed March 1, 1995 and assigned to the assignee of the present invention. Many prior art systems which provide a collision warning utilize a fixed distance threshold which may be measured in feet, or a headway distance which may be measured in seconds and varies with the current speed of the vehicle. However, such prior art systems do not account for the dynamic deceleration capabilities of the vehicle due to the current operating environment and do not calculate a minimum separation distance for use in a smart cruise control system. Thus, these systems may unnecessarily trigger an alarm when the vehicle is capable of avoiding a collision without driver intervention. U.S. Patent Application No. 08/396,627 entitled "System and Method for Collision Warning Based on Dynamic Deceleration Capability Using Predicted Road Load", filed March 1, 1995 and assigned to the assignee of the present invention, discloses a system and method for warning of a possible collision based on dynamic vehicle deceleration ability determined using predicted road load. This technique seeks to reduce the unnecessary alarms when the vehicle is capable of avoiding a collision due to its light loading.

Collision warning systems which trigger an alarm based on a fixed distance or fixed headway distance are particularly adaptable to providing information to other vehicle systems such as a smart cruise control system. In these applications the vehicle weight my vary by 300% or more. This results in a wide range of deceleration capabilities since a heavily loaded vehicle at zero throttle will decelerate less rapidly than a lightly loaded vehicle when descending a grade, and in many instances may even accelerate. Likewise, a heavily loaded vehicle can decelerate more rapidly when climbing a grade than a lightly loaded vehicle. Furthermore, medium and heavy-duty trucking applications experience more aerodynamic drag than typical automotive applications and transmission shifting and/or an engine retarder can be used to decelerate the vehicle in conjunction with the service brakes. Thus, dynamic determination of deceleration capability is particularly desirable for these applications which include MVMA Class 7 and Class 8 vehicles especially when using a cruise control system which uses a distance sensing radar for cruise control distance regulations.

## SUMMARY OF THE INVENTION

The present invention provides a method of determining the minimum separation distance between a lead vehicle and a host vehicle when in a cruise mode to prevent contact between the lead and host vehicles when the lead vehicle decelerates based on the calculated deceleration capability of the host. The deceleration capability of the lead vehicle is unknown and a value must be assumed for use in calculating the separation distance. According to the present invention, a predicted road load transmission deceleration capability, retarder deceleration capability and a measured brake effectiveness are used to determine the overall vehicle deceleration capability and hence the required separation distance between the lead and host vehicle.

The advantages accruing to the present invention are numerous. The method of the present invention provides a more reliable determination of the proper separation distance between a lead vehicle and a host vehicle by utilizing current vehicle operating conditions and accounting for variation in vehicle loading conditions and brake effectiveness and available vehicle deceleration devices such as an automated transmission, engine retarder and/or an automated braking system (ABS). The method of the present invention provides an estimate of the minimum separation distance between a lead vehicle and a host vehicle when the host vehicle is operating in a cruise control mode where the cruise control is "smart" and can provide for the automatic deceleration or acceleration of the host vehicle to maintain the calculated minimum separation distance.

One provision of the present invention is to determine the minimum separation distance between a lead vehicle and a host vehicle when the host is in a cruise mode to prevent a collision upon deceleration of the lead vehicle.

Another provision of the present invention is to determine the minimum separation distance between a lead vehicle and a host vehicle when the host is in a cruise mode to prevent a collision based on the deceleration capability of the host vehicle.

Another provision of the present invention is to determine the minimum separation distance between a lead vehicle and a host vehicle when the host is in a cruise mode to prevent a collision based on the operational capability of the host vehicle's service brakes.

Still another provision of the present invention is to determine the minimum separation distance between a lead vehicle and a host vehicle when the host is in a cruise mode based on the road load and system deceleration capabilities of the host vehicle.

These and other objects and advantages of the present invention will become apparent upon review of the following description taken in view of the accompanying drawings.

## BRIEF DESCRIPTION OF THE DRAWINGS

FIG. 1 is a block diagram of a vehicle smart cruise system incorporating the features of the present invention;

FIG. 2 is a flow chart depicting a method for determination of an optimum vehicle separation distance of the present invention; and

FIG. 3 is a graph illustrating the operation of a device for predicting road load according to the present invention.

## DETAILED DESCRIPTION OF THE PREFERRED EMBODIMENT

The present invention provides a method to calculate a minimum separation distance between a lead vehicle and a host vehicle for operation of a "smart cruise" system based on an assumed deceleration capability for the lead vehicle and a calculated deceleration capability for the host vehicle based on road load and brake effectiveness and the deceleration capability of other systems such as an engine retarder. The smart cruise system uses a vehicle radar system to measure the separation distance between the lead vehicle and the host vehicle and maintain a given separation distance (such as the minimum separation distance calculated according to the present invention) by signaling various vehicle systems to accelerate or decelerate the host vehicle.

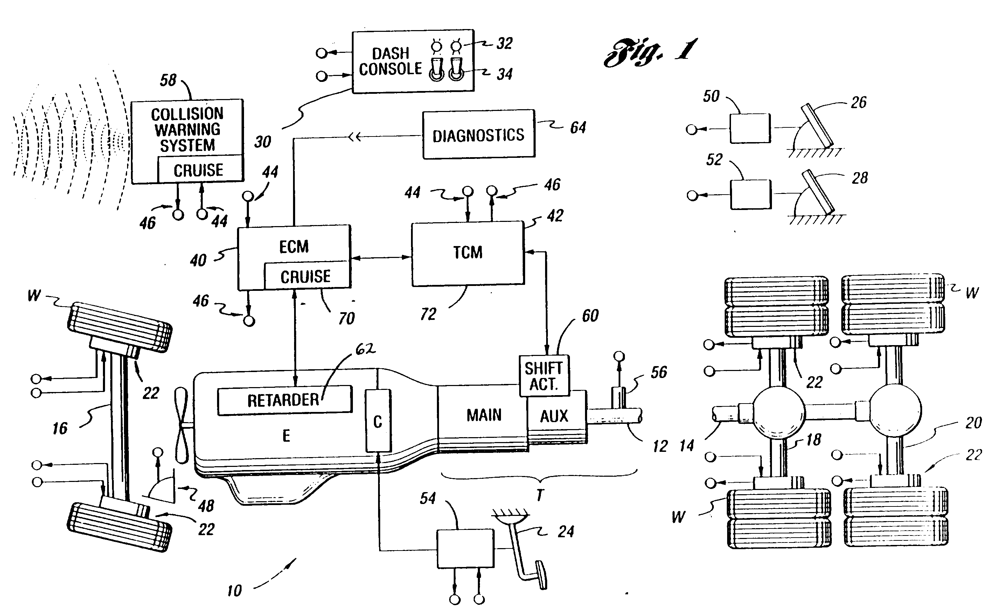

Referring now to FIG. 1, a graphical representation of one embodiment of a system and method for smart cruise control and collision warning according to the present invention is shown. FIG. 1 depicts a vehicle 10, such as a tractor of a tractor semi-trailer vehicle, having an electronically controlled engine E coupled to a compound transmission T via a clutch mechanism C. Although a vehicle such as depicted in FIG. 1 represents one of the possible applications for the system and method of the present invention, it should be appreciated that the present invention transcends any particular type of vehicle employing an electronically controlled engine implementing standard engine control functions which utilize road load information, distance information and/or distance separation information as described herein.

In a preferred embodiment, transmission T is preferably a compound change gear or change speed transmission having a main section connected in series with an auxiliary section which includes an output shaft 12 coupled to a vehicle drive shaft 14. Vehicle 10 includes at least two axles such as a steer axle 16 and at least one drive axle, such as axles 18 and 20. Each axle supports corresponding wheels W having foundation or service brake components 22 which may be manually or automatically actuated depending upon the particular application and operating conditions. For example, a vehicle equipped with ABS may assume automatic control of braking under appropriate conditions such as when the vehicle is braking and the system detects a sufficient slip differential among one or more wheels. Service brake components 22 may include wheel speed sensors and electronically controlled pressure valves to effect control of the vehicle braking system as described herein.

Vehicle 10 may include conventional operator controls such as clutch pedal 24, accelerator pedal 26, brake pedal 28, and an operator interface, such as dashboard control console 30, which may include any of a number of output devices 32, such as lights, LED or LCD displays, alarms, buzzers, and the like. Dashboard control console 30 also includes various input devices 34, such as switches, potentiometers, push buttons, and the like. The vehicle control system includes an electronic control module such as engine control module (ECM) 40 and preferably includes an additional electronic control module for effecting control of transmission T, such as transmission control module (TCM) 42. Of course, engine and transmission control may be combined in a single electronic control module for some applications. The ECM 40 and TCM 42 communicate with a variety of sensors via inputs 44 and with numerous actuators via outputs 46. Sensors may include a steering angle sensor 48, wheel speed sensors (including in braking components 22), an electronic accelerator pedal sensor (APS) 50, a brake pedal sensor or switch 52, a clutch control/sensor 54, and an output speed sensor 56, among numerous others. The vehicle also includes a collision warning system 58 which preferably provides distance and closing rate information relative to vehicle 10 and at least one forward vehicle or object. In a preferred embodiment, collision warning system 58 is a commercially available Eaton VORAD EVT-200 collision warning system.

Actuators may include a shift actuator 60 for automatically effecting a gear shift within transmission T, electronically controlled pressure valves (included in braking components 22), and an engine retarder 62 or the like (such as a driveline retarder). As is known, an engine retarder is a device utilized to supplement the foundation or service brakes when descending long grades and to prolong service brake life in high-frequency start and stop operation. Retarders may be categorized as engine brakes, exhaust brakes, hydraulic retarders and electric retarders. In a preferred embodiment, engine retarder 62 is an engine brake such as the well known Jacobs engine brake. This device converts a power producing diesel engine into a power absorbing air compressor. This is achieved by shutting off the fuel and hydraulically opening the exhaust valve as two or more pistons approach top dead center during the compression stroke. Although many engine manufacturers disable the engine brake when cruise control is engaged, some systems may utilize the engine retarder when intelligent or smart cruise control is engaged to enhance vehicle deceleration. This information can be utilized by the present invention to provide a more accurate indication of deceleration capability.

As also illustrated in FIG. 1, a diagnostics module 64 may be selectively connected to ECM 40 and preferably communicates status messages as defined by the SAE J1587 standard published by the Society of Automotive Engineers, the disclosure of which is hereby incorporated by reference in its entirety. These messages are also available to other system microprocessors during normal operation such as TCM 42 and collision warning system 58 and include information such as current engine speed and torque, accelerator position, road speed, cruise control status, and cruise control set speed, among many others.

ECM 40 communicates with TCM 42 preferably according to either the SAE J1922, SAE J1939, or SAE J1587 standard utilizing a communication link conforming to the SAE J1708 physical layer standard all of which are published by the Society of Automotive Engineers, the disclosures of which are hereby incorporated by reference in their entirety. Alternatively, the controller area network (CAN) standard may be utilized for controller communications. Preferably, collision warning system 58 communicates with ECM 40 and/or TCM 42 via a communication link complying with SAE J1708 or CAN and communication standards substantially similar to SAE J1922 or SAE J1939. It will be appreciated by one of ordinary skill in the art that the various connections between electronic controllers, sensors, and actuators may be changed to accommodate the particular requirements of a specific application without departing from the spirit or scope of the present invention. Similarly, various communication links and protocols may be accommodated with appropriate translators or converters. For example, in one embodiment of the present invention, distance sensor 58 communicates directly with ECM 40 utilizing J1708 and J1939. In another embodiment of the present invention, distance sensor 58 communicates serially via an RS232 link which is converted first to J1708 and then to CAN protocol to communicate with TCM 42 which then communicates with ECM 40 via a CAN/J1708 converter and J1922 messaging protocol. Thus. the present invention relies on the exchange of control and status information which is independent of the particular data path, and in some cases the messaging protocol, utilized in the information exchange.

The ECM 40, TCM 42, and collision warning system 58 contain control logic rules which may be implemented in a variety of combinations of hardware circuitry components and programmed microprocessors to effect control of the various vehicle systems and subsystems. Often, control functions are logically separated and have specific input parameters, control equations, and output parameters which may be unique or shared with other logical control functions and/or other system and subsystem controllers. Cruise control functions (either intelligent or traditional) are represented schematically by cruise control block 70 within ECM 40 which represents the particular logic rules utilized to effect these functions. Similarly, in a preferred embodiment, collision warning system 58 includes a cruise control block which represents the logic rules necessary to implement intelligent (smart) cruise control functions. However, the accuracy of predicted collision using the present invention is improved if the collision warning system is aware of any systems or subsystems which may provide additional automatic deceleration capabilities without driver intervention. This information is provided via status messages defined in SAE J1587 which indicate the presence of various vehicle equipment such as a retarder or a brake ABS system.

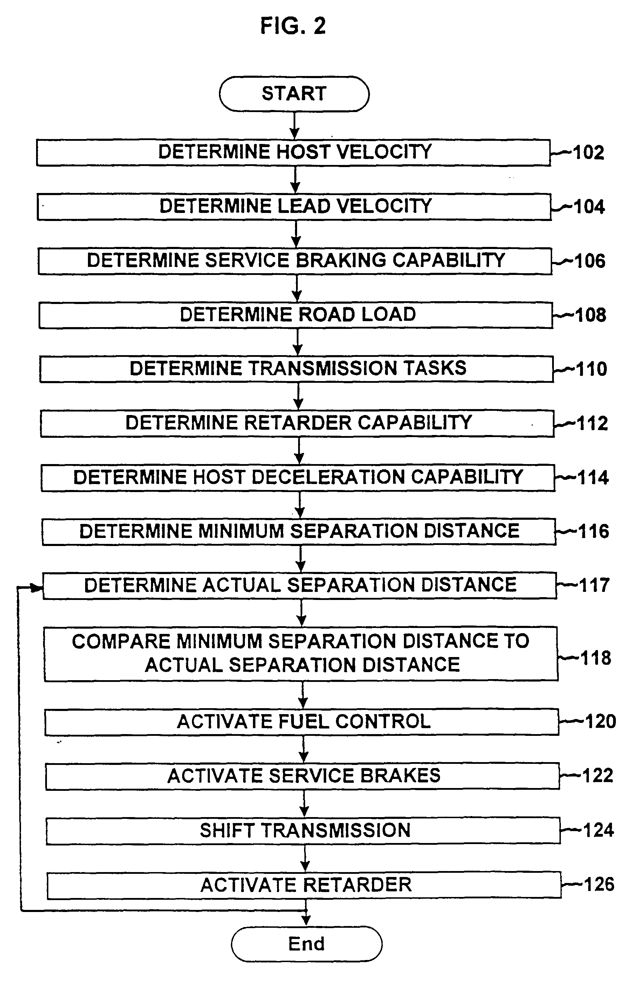

Referring now to FIG. 2, a flow chart is shown illustrating the system and method of collision warning according to the present invention. It should be recognized that the flowchart presented in FIG. 2 in describing the present invention depicts sequential processing of the method steps although any of a number of processing strategies could be utilized without departing from the spirit or scope of the present invention. For example, if the control logic is implemented in hardware, many of the method steps may be performed simultaneously or nearly simultaneously. Similarly, in a preferred embodiment an interrupt driven processing strategy is utilized to achieve the objects and advantages of the present invention. One of ordinary skill in the art will also recognize that the concepts of the present invention may obviously be extended to a corresponding parallel implementation without departing from the spirit or the scope of the present invention. Similarly, a combined sequential/parallel implementation utilizing hardware and/or software to accomplish one or more of the objects and advantages of the present invention is within the contemplation of the present invention.

The control and calculation steps illustrated in FIG. 2 are preferably performed by control logic within collision warning system 58 illustrated in FIG. 1. However, the present invention is independent of the actual location of the control logic provided the relevant information is communicated to and from appropriate vehicle systems and subsystems. The inter-vehicle distance between the host vehicle and at least one forward vehicle (lead vehicle) is determined at block 117. In a preferred embodiment, this information is provided utilizing a commercially available sensor. Preferably, the sensor also determines the closing rate of the host vehicle relative to each forward target vehicle or object. However, inter-vehicle distance information is easily available by integrating the relative velocity or closing rate information.

Block 102 of FIG. 2 determines the velocity of the host (following) vehicle 10 as depicted in FIG. 1. This velocity could be generated based on the output of an ABS wheel speed sensor or on the values of the engine speed and transmission gear ratio.

Block 104 of FIG. 2 determines the velocity of the lead vehicle based on the host velocity as determined in block 102 and the change in separation distance (if any) as determined in block 117. The velocity of the lead vehicle can be determined by adding or subtracting the change in separation distance in a given time period.

Block 106 of Fig. 2 determines the service braking capability of the vehicle with or without ABS where the maximum braking capability depends on a variety of factors including brake operational history, wear, vehicle loading, tire condition and interface between the tire and the road. To maximize the reliability of the calculated separation distance, a variety of variables must be measured and/or controlled including those that affect a brake. If ABS is available, then this subsystem can provide maximum braking if required.

Block 108 of FIG. 2 determines the current road load of the vehicle. Road load represents the difference between the driving effort necessary to maintain the current vehicle road speed of the vehicle. Thus, the road load represents a number of forces acting on the vehicle in the direction of motion (longitudinal or x-direction) which are both internal and external to the vehicle. For example, road load incorporates external forces, such as the force of gravity when ascending or descending an incline and aerodynamic drag, in addition to internal forces, such as frictional forces of the vehicle engine and transmission.

Determination of current vehicle road load begins with Newton's second law of motion applied to the longitudinal direction:

$$\Sigma F = ma_x$$

where the forces acting on the vehicle include the driving force which is resisted by the combined forces represented by the road load. The driving force can be computed utilizing information provided by the ECM which includes the peak torque available from the engine and the current percentage of peak torque being delivered according to:

$$Tq_E = \%Tq_{Del} * Tq_{Peak}$$

where $Tq_E$ represents the engine torque delivered by the engine. This value is used to calculate the torque delivered to the vehicle wheels according to:

$$Tq_w = Tq_E * Ratio_{Trans} * Ratio_{Axle}$$

where $Ratio_{Trans}$ represents the current transmission gear ratio and $Ratio_{Axle}$ represents the axle ration. Alternatively, the above equation may be expressed as:

$$F_{drive} = Tq_E * \frac{ES}{RS} * \frac{\pi}{44}$$

where ES represents the engine speed in rpm and RS represents the road speed in mph as determined by the ECM and broadcast according to the SAE J1587 standard. The radius of the vehicle tires is incorporated into the vehicle speed measured in mph by the ECM. Applying the first equation yields:

$$\Sigma F = m * a_x = F_{drive} - F_{road}$$

and solving for $F_{Road}$ yields:

$$F_{Road} = F_{Drive} - m * a_X$$

$$= F_{Drive} - \frac{W}{g} * \frac{dv}{dt}$$

$$= F_{Drive} - \frac{\mu w}{g} * \frac{dv}{dt}$$

where g represents the acceleration due to gravity, W represents the weight of the vehicle, dv/dt represents the time rate of change of vehicle velocity, and $\mu_w$ represents the mean value or expected value for gross combined vehicle weight (GCW). A number of methods may be utilized to provide an estimate of GCW such as those disclosed in U.S. Patent Nos. 5,335,566 and 5,262,939, the disclosures of which are hereby incorporated by reference in their entirety.

The current value determined for $F_{Road}$ can be used to predict collision probability, However, since the road load may change between the time when a forward vehicle first comes into range of the collision warning system and the time of a potential collision, it is desirable to predict the road load at the estimated time or subsystem which is automatically actuated.

Block 110 determines the shift state of the transmission and permissible shift strategies based on vehicle speed and engine speed. Transmission downshifts are used to slow the vehicle to increase the total deceleration capability and thereby increase the separation distance.

Block 112 of FIG. 2 determines the retarder deceleration capability (a retard) based on previous operational history.

Block 114 of FIG. 2 determines the total host deceleration capability according to the following equation:

$$a_{Total} = \Sigma a$$

$$= a_{Defuel} + a_{Trans} + a_{Retard} + a_{Brake} + a_{Misc}$$

where $a_{Total}$ as discussed previously, represents the total vehicle deceleration capability, $a_{Retard}$ represents deceleration available from an engine retarder, $a_{Brake}$ represents deceleration available from automatically actuated service brakes, and $a_{Misc}$ represents other optional vehicle equipment which may provide additional deceleration.

Block 116 of FIG. 2 then uses the total deceleration capability to determine a minimum separation distance by substituting the values into the basic distance equation:

$$x(t) = x_0 + t\frac{dx}{dt} - \frac{1}{2}\, t^2\, \frac{d^2 x}{dt^2}$$

$$= x_0 + tv - \frac{1}{2}\, t^2\, a_{Total}$$

where $x_0$ represents the inter-vehicle distance and v represents the closing rate between a forward vehicle and the host vehicle. If the result of the above equation is negative, a collision is indicated and the smart cruise system then defaults the engine and/or activates the service brakes to increase the separation distance to at least the minimum. A safety factor (threshold) may be utilized such that the minimum separation distance is increased and the smart cruise then determine if the result of the above equation is below the minimum distance plus the safety factor.

With two vehicles traveling on the roadway, one following the other, the lead vehicle and the host vehicle are separated by distance d. It is desirable to vary distance d depending on the deceleration capabilities of the two vehicles so that vehicle-to-vehicle contact is precluded. Assuming that the lead vehicle has a given deceleration capability, according to the present invention, the road load of the host vehicle is calculated as described infra and the brake effectiveness is estimated based on measured data generated during previous braking events. With these parameters in hand, as optimum separation distance d can be calculated according to the following equation:

$$\text{distance } d \; = \; \left( \frac{V_1^2}{2a_1} - \frac{V_2^2}{2a_2} \right) + V_1 t_r$$

where

$V_1$ = host vehicle velocity
$V_2$ = lead vehicle velocity
$a_1$ = host vehicle maximum deceleration rate
$a_2$ = lead vehicle maximum deceleration rate
$t_r$ = lead vehicle reaction time

for example:

$V_1 = V_2 =$ 88 ft/sec
$a_1$ = 12.8 ft/sec$^2$
$a_2$ = 32 ft/sec$^2$
$t_r$ = 0.25 seconds

Using the above equation, the calculated separation distance d is 203.5 ft. and at 88 ft/sec, this distance d would be traversed by the vehicles in 2.31 seconds. The maximum deceleration capability of the host vehicle could be further defined with data from other subsystems and measured parameters.

Block 118 comprises the minimum separation distance calculated in block 116 with the actual separation distance measured in block 117 and adjustments in the various vehicle subsystems are made in subsequent steps according to the closing rate and vehicle velocity and the deceleration or acceleration needed to maintain the desired separation distance. Blocks 120-126 activate these various subsystems where block 120 activates the engine fuel control to reduce or increase engine power as required. Block 122 activates the service brakes (including ABS if installed) to slow the vehicle if required. Block 124 shifts the transmission to the appropriate gear ratio while block 126 activates the engine retarder to further slow the vehicle if needed. The program then cycles back to block 117 to determine the actual separation distance and then to block 118 for comparison to the calculated minimum etc. Note that the order and implementation of blocks 120-126 are optional and can be varied according to the presence and operational condition of the vehicle systems and subsystems.

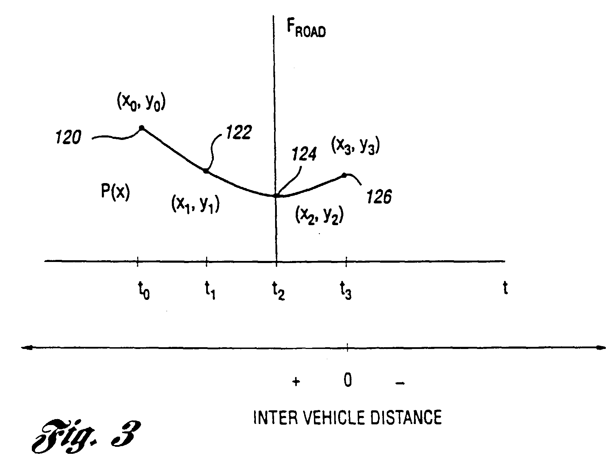

Referring now to FIG. 3, a graph is shown illustrating one technique for predicting future road load according to the present invention. The graph of FIG. 3 plots road load as a function of time t and distance x. Points 120 and 122 having coordinates $(x_0, y_0)$ and $(x_1, y_1)$ represent previously computed and stored values for road load at times $t_0$ and $t_1$, respectively. Point 124 with coordinates $(x_2, y_2)$ corresponds to the current road load at time $t_2$. The curve passing through the points is represented by P(x). Point 126 represents the predicted value P(x) at future time $t_3$ where the

inter-vehicle distance is predicted to be zero, i.e. the point of collision. The future value for the road load can then be determined based on a predetermined number of previous road load values using any of a number of extrapolation or prediction techniques.

The actual technique and the number of previous road load value will depend on the particular application. In a preferred embodiment, Newton's divided difference technique is utilized with three (3) road load values to determine a future road load value according to:

$$P(x) = A_0 + A_1 (x - x_0) + A_2 (x - x_1)$$

where:

$$A_0 = y_0$$

$$A_1 = \frac{y_1 - y_0}{x_1 - x_0}$$

and

$$A_2 = \frac{\dfrac{y_2 - y_1}{x_2 - x_1} - \dfrac{y_1 - y_0}{x_1 - x_0}}{x_2 - x_0}$$

The predicted value is then utilized to determine the projected deceleration capability of the vehicle at the time of interest.

It is understood, of course, that while the forms of the invention herein shown and described include the best mode contemplated for carrying out the present invention, they are not intended to illustrate all possible forms thereof. It will also be understood that the words used are descriptive rather than limiting, and that various changes may be made without departing from the spirit or scope of the invention as claimed below.

**Claims**

1. A method for determining the minimum separation distance between a lead vehicle and a host vehicle when the host vehicle is operating in a cruise control mode, the method comprising:

   determining a maximum vehicle deceleration capability by determining a vehicle road load value based on a difference between a vehicle driving force and a product of vehicle mass and acceleration;
   determining a vehicle service braking capability;
   determining the potential effect of operation of a vehicle transmission in the deceleration of the vehicle;
   determining the potential effect of a retarder in the deceleration of the vehicle;
   determining the velocity of the lead vehicle;
   determining the velocity of the host vehicle;
   calculating a minimum separation distance according to;

$$d = \left( \frac{V_1^2}{2a_1} - \frac{V_2^2}{2a_2} \right) + V_1 t_r$$

   where d represents the minimum separation distance, $V_1$ represents the velocity of the host vehicle, $V_2$ represents the velocity of the lead vehicle, $a_1$ represents the deceleration capability of the host vehicle, $a_2$ represents the deceleration capability of the lead vehicle and $t_r$ represents the response time of the host vehicle.

2. A system for determining and controlling the minimum separation distance between a lead vehicle and a host vehicle when the host vehicle is operating in a cruise control mode, the system comprising:

a sensor for determining an inter-vehicle separation distance between a lead vehicle and a host vehicle; control logic in communication with the sensor for controlling the magnitude of the separation distance by accelerating and decelerating the host vehicle relative to the lead vehicle to maintain a minimum separation distance based on the maximum deceleration rate and a lead vehicle velocity and a host vehicle velocity.

3. The system of claim 2, wherein the control logic is operative to predict a value of vehicle road load based on a predetermined number of previously determined values of road load utilizing a divided difference technique.

4. The system of claim 2, wherein the control logic is operative to predict a vehicle road load value based on a predetermined number of previously determined vehicle road load values.

5. The system of claim 2, wherein the control logic determines a maximum vehicle braking capability based on the condition of the vehicle's service braking system.

6. The system of claim 2, wherein the control logic utilizes at least the response time and velocity of the host vehicle to determine the minimum separation distance.

7. The system of claim 2, wherein said control logic determines said minimum separation distance according to:

$$d = \left( \frac{V_1^2}{2a_1} - \frac{V_2^2}{2a_2} \right) + V_1 t_r$$

where d represents the minimum separation distance. $V_1$ represents the velocity of the host vehicle, $V_2$ represents the velocity of the lead vehicle, $a_1$ represents the maximum deceleration rate of the host vehicle, $a_2$ represents the maximum deceleration rate of the lead vehicle and $t_r$ represents the response time of the host vehicle.

8. The system of claim 7, wherein said control logic determines said maximum deceleration rate based on a maximum service braking capability and a maximum transmission braking capability and a maximum retarder braking capability.

9. The system of claim 2, wherein the vehicle includes an engine and at least one tire and wherein said control logic determines the value of the current vehicle road load by subtracting a product of the mass of the vehicle and vehicle road speed from vehicle driving force delivered to at least one tire from said engine.

*Fig. 1*

EP 0 982 173 A2

## FIG. 2

```
                    ┌─────────────┐
                    │    START    │
                    └─────────────┘
                           │
                           ▼
    ┌──────────────────────────────────────────┐
    │         DETERMINE HOST VELOCITY            │──102
    └──────────────────────────────────────────┘
                           │
                           ▼
    ┌──────────────────────────────────────────┐
    │         DETERMINE LEAD VELOCITY            │──104
    └──────────────────────────────────────────┘
                           │
                           ▼
    ┌──────────────────────────────────────────┐
    │     DETERMINE SERVICE BRAKING CAPABILITY   │──106
    └──────────────────────────────────────────┘
                           │
                           ▼
    ┌──────────────────────────────────────────┐
    │           DETERMINE ROAD LOAD              │──108
    └──────────────────────────────────────────┘
                           │
                           ▼
    ┌──────────────────────────────────────────┐
    │       DETERMINE TRANSMISSION TASKS         │──110
    └──────────────────────────────────────────┘
                           │
                           ▼
    ┌──────────────────────────────────────────┐
    │       DETERMINE RETARDER CAPABILITY        │──112
    └──────────────────────────────────────────┘
                           │
                           ▼
    ┌──────────────────────────────────────────┐
    │   DETERMINE HOST DECELERATION CAPABILITY   │──114
    └──────────────────────────────────────────┘
                           │
                           ▼
    ┌──────────────────────────────────────────┐
    │   DETERMINE MINIMUM SEPARATION DISTANCE    │──116
    └──────────────────────────────────────────┘
                           │
                           ▼
    ┌──────────────────────────────────────────┐
┌──▶│   DETERMINE ACTUAL SEPARATION DISTANCE     │──117
│   └──────────────────────────────────────────┘
│                          │
│                          ▼
│   ┌──────────────────────────────────────────┐
│   │ COMPARE MINIMUM SEPARATION DISTANCE TO     │──118
│   │      ACTUAL SEPARATION DISTANCE            │
│   └──────────────────────────────────────────┘
│                          │
│                          ▼
│   ┌──────────────────────────────────────────┐
│   │          ACTIVATE FUEL CONTROL             │──120
│   └──────────────────────────────────────────┘
│                          │
│                          ▼
│   ┌──────────────────────────────────────────┐
│   │         ACTIVATE SERVICE BRAKES            │──122
│   └──────────────────────────────────────────┘
│                          │
│                          ▼
│   ┌──────────────────────────────────────────┐
│   │          SHIFT TRANSMISSION                │──124
│   └──────────────────────────────────────────┘
│                          │
│                          ▼
│   ┌──────────────────────────────────────────┐
│   │           ACTIVATE RETARDER                │──126
│   └──────────────────────────────────────────┘
│                          │
└──────────────────────────┤
                           ▼
                    ┌─────────────┐
                    │     End     │
                    └─────────────┘
```

$F_{ROAD}$

$(x_0, y_0)$

120

122

124  $(x_3, y_3)$

$P(x)$

$(x_1, y_1)$

$(x_2, y_2)$

126

$t_0$   $t_1$   $t_2$   $t_3$   $t$

+   0   −

INTER VEHICLE DISTANCE

Fig. 3